# NEUE EUROPÄISCHE PATENTSCHRIFT

(11) **EP 0 476 497 B2**
(45) Veröffentlichungstag und Bekanntmachung des Hinweises auf die Entscheidung über den Einspruch: **30.12.1998**
(45) Hinweis auf die Patenterteilung: 01.03.1995
(21) Anmeldenummer: 91115334.4
(22) Anmeldetag: 11.09.1991
(51) Int. Cl.: F16F 1/36, F16F 1/54

(54) **Gummi-Metall-Federelement**
Metal-rubber spring element
Elément ressort à caoutchouc et métal

(30) Priorität: 13.09.1990 DE 4029080
(43) Veröffentlichungstag der Anmeldung: 25.03.1992
(73) Patentinhaber: Continental Aktiengesellschaft, 30165 Hannover (DE); Adam Opel Aktiengesellschaft, 65428 Rüsselsheim (DE)
(72) Erfinder: Heitzig, Jürgen, W-3000 Hannover 1 (DE); Roos, Jürgen, W-6097 Trebur 3 (DE)
(74) Vertreter: Schneider, Egon

(56) Entgegenhaltungen:
- EP-A- 0 124 069
- DE-A- 2 309 950
- DE-B- 1 204 464
- FR-A- 2 225 657
- US-A- 2 621 876
- US-A- 2 898 063
- PATENT ABSTRACTS OF JAPAN vol. 11, no. 205 (M-603)(2652)3. Juli 1987 & JP-A-62 024 040 ( NISSEI PLASTICS ) 2. Februar 1987
- PATENT ABSTRACTS OF JAPAN vol. 10, no. 40 (M-454)(2097)18. Februar 1986 & JP-A-60 192 609 ( TOYOTA ) 1. Oktober 1985

## Beschreibung

Die Erfindung betrifft ein Gummi-Metall-Federelement gemäß dem Oberbegriff des Patentanspruchs 1.

Derartige Federelemente und Verfahren zu deren Herstellung sind aus der DE-PS 29 09 934 bekannt. Sie unterschieden sich von üblichen Gummi-Metall-Federelementen dadurch, daß ihre Metallteile von einem sie gegen Korrosionsschäden und Steinschlag schützenden, vorzugsweise filmartig dünnen elastomeren Oberflächenbelag überzogen waren. Dieser wurde zunächst auf den gesamten Metallflächen aufgebracht und anschließend in einem besonderen Arbeitsgang an den Anschraubflächen wieder entfernt, um so eine definierte Anlage und damit sichere und unveränderliche Fixierung der Federelemente zu ermöglichen. Ferner ist es bekannt, an entsprechenden metallischen Anschlußteilen rings um die zu deren Befestigung vorgesehenen Schraublöcher metallische Vorsprünge mit ebenen, kreisringförmigen Stirnflächen anzubringen, die an einer Gegenfläche zur Anlage gebracht werden können. Zur Erzeugung einer definierten Anlage müssen diese Stirnflächen frei von jeglicher Beschichtung sein.

Der vorliegenden Erfindung liegt die Aufgabe zugrunde, den zusätzlichen Arbeitsgang zur Entfernung einer elastomeren Beschichtung bzw. die Vorkehrungen zur örtlichen Verhinderung einer solchen Beschichtung einzusparen, also den bei der Herstellung der Federelemente auf ihren Metallteilen erzeugten elastomeren Oberflächenbelag auf diesen zu belassen und trotzdem zu gewährleisten, daß für die Verschraubung der Federelemente einerseits mit der von ihnen aufzunehmenden Last - z. B. einem Kraftfahrzeugmotor - und andererseits mit einem Aufnahmegestell - beispielsweise dem Chassis eines Kraftfahrzeugs - metallisch harte, unverformbare Anlagebereiche vorzusehen.

Diese Aufgabe wird erfindungsgemäß bei einem Gummi-Metall-Federelement der eingangs genannten Gattung dadurch gelöst, daß dieses die im kennzeichnenden Teil des Patentanspruchs 1 angegebenen Merkmale aufweist. Die die Anschraubflächen der erfindungsgemäßen Federelemente in Richtung der Flächennormalen überragenden metallischen Vorsprünge, deren Höhe mindestens der Schichtdicke der sie umgebenden Schutzschicht entspricht, bilden annähernd punkt- oder linienförmige Anlagebereiche gegenüber den zugehörigen Anschraubflächen einerseits beispielsweise eines Kraftfahrzeugmotors und andererseits beispielsweise eines Kraftfahrzeugchassis, die eine eindeutige, unveränderliche Positionierung und Befestigung ermöglichen. Dies gilt selbst dann, wenn sie zunächst einen elastomeren Oberflächenbelag aufweisen - insbesondere einen filmartig dünnen elastomeren Oberflächenbelag mit einer Schichtstärke von z. B. 0,5 mm - denn dieser dünne Oberflächenbelag wird infolge der kleinen Oberfläche der Vorsprünge und des aus dieser resultierenden hohen Flächendruckes bei der Verschraubung sofort weggedrückt, so daß es in jedem Fall zu einer definierten metallischen Anlage kommt.

In den Unteransprüchen sind vorteilhafte Ausgestaltungen der vorliegenden Erfindung angegeben

In einer bevorzugten Ausführungsform sind die Vorsprünge so hoch ausgeführt, daß sie die elastomere Schutzschicht überragen. wobei sie bis zur Höhe der Schutzschicht von dieser bedeckt und im übrigen von dieser freigehalten sind. Dies kann beispielsweise dadurch erreicht werden, daß bei der Herstellung der erfindungsgemäßen Federelemente durch entsprechende Gestaltung der Vulkanisierform oder geeignete Formeinsätze verhindert wird, daß die elastomere Oberflächenbelagsmasse den Kuppenbereich der Vorsprünge erreichen kann.

Die zweckmäßig kegel-, pyramiden-, warzen-oder dachförmigen Vorsprünge werden vorzugsweise bei der Herstellung der metallischen Anschlußteile im Rahmen des hierbei ohnehin erfolgenden Stanz- oder Formungsvorganges in diese eingeformt oder an diese angeformt, so daß keinerlei zusätzlicher Aufwand entsteht. Als besonders vorteilhaft hat es sich erwiesen, die Vorsprünge als in die metallischen Anschlußteile eingeformte Sikken auszubilden. In einer bevorzugten Ausführungsform der Erfindung weisen die metallischen Anschlußteile Durchgangslöcher für eine Schraubbefestigung auf, die von durch entgegengesetzte Verformung der Anschlußteile erzeugten, zu den Durchgangslöchern konzentrischen Doppelsicken umschlossen sind.

Die Zeichnung verdeutlicht die vorliegende Erfindung an zwei Ausführungs- und Anwendungsbeispielen, und zwar zeigt
- Fig. 1: ein erfindungsgemäß ausgebildetes Puffer-Federelement,
- Fig. 2: ein als Kraftfahrzeug-Motorlager verwendbares Bügel-Federelement und
- Fig. 3: eine vergrößerte Darstellung des Bereichs III in Fig. 2.

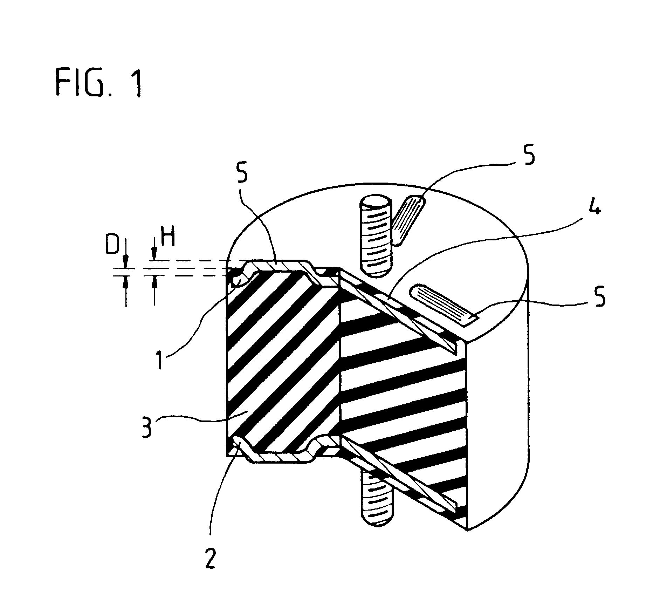

Das Pufferelement in Fig. 1 besteht im wesentlichen aus dem Gummifederkörper 3 und den an ihn anvulkanisierten Anschlußteilen 1 und 2, die zur Befestigung des Federelementes je einen starr an ihnen verankerten Schraubbolzen tragen. Die Anschlußteile 1 und 2 sind mit einer aus dem elastomeren Material des Gummifederkörpers 3 bestehenden Schutzschicht 4 überzogen, die von etwa dachförmigen, als Sicken in die Anschlußteile 1 und 2 eingeformten Vorsprüngen (5) überragt wird, deren Höhe H größer ist als die Schichtdicke D der Schutzschicht. Durch entsprechende Ausbildung der Vulkanisierform sind die die Schutzschicht 4 überragenden Teile der Vorsprünge 5 von Überzugsmasse freigehalten worden, so daß sie bei der Montage des Federelementes eine unverformbare Abstützung bilden, über die das Federelement absolut starr verschraubt werden kann.

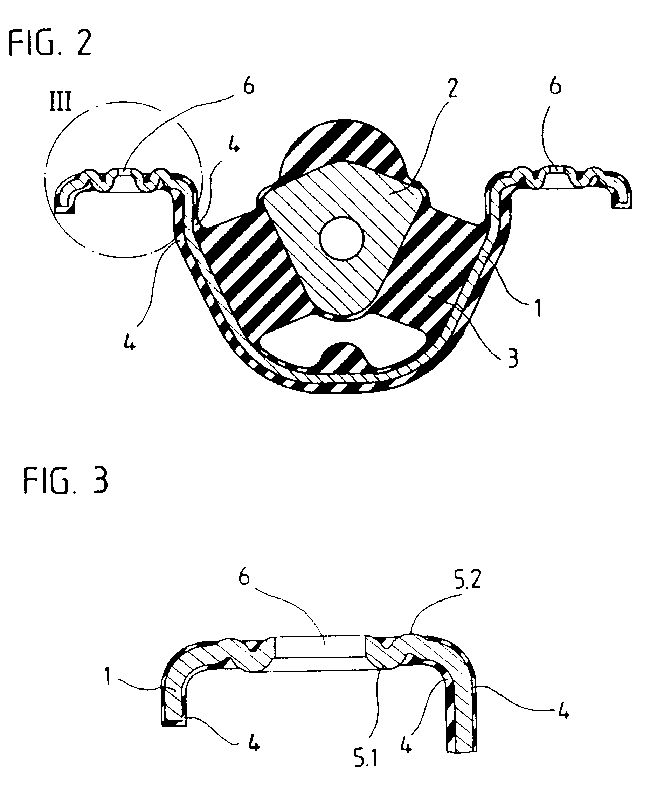

In Fig. 2 ist die Anwendung der vorliegenden Erfindung an einem Kraftfahrzeug-Motorlager dargestellt, bei dem der zweigeteilte Gummifederkörper 3 die mit einer elastomeren Schutzschicht 4 überzogenen Anschlußteile 1 und 2 gegeneinander abstützt. Das bügelförmige Anschlußteil 1 weist in seinen Befestigungsbereichen III Durchgangslöcher 6 für eine Schraubbefestigung auf. Diese Befestigungslöcher sind, wie Fig. 3 im Detail zeigt, von einer Doppelsicke 5.1-5.2 umgeben, die durch entgegengesetzte konzentrische Verformung der Lochumgebung erzeugt ist. Die die Schutzschicht 4 überragenden Kämme der konzentrischen Sicken sind durch geeignete Abdeckung in der Vulkanisierform von elastomerem Material freigehalten worden, so daß sie beidseitig unverformbare Anlageflächen für eine starre Verschraubung bilden, so daß die Sicherheit der Verschraubung nicht durch Verlust an Vorspannkraft und eine hierdurch verursachte Lockerung der Schraube verloren geht.

Durch die Erfindung kann eine deutliche Kostenreduktion bei der Herstellung von Gummi-Metall-Federelementen erzielt werden, da jegliche Nacharbeit nach dem Vulkanisieren entfällt und die Federelemente einbaufertig dem Vulkanisationswerkzeug entnommen werden können.

## Patentansprüche

1. Gummi-Metall-Federelement, das einen zwischen metallischen Anschlußteilen (1, 2) angeordneten und haftend mit diesen verbundenen Gummifederkörper (3) aufweist, wobei die freien, nicht vom Gummifederkörper (3) bedeckten Oberflächen der metallischen Anschlußteile (1, 2) teilweise mit einer an ihnen haftenden elastomeren Schutzschicht (4) versehen sind und metallische Vorsprünge (5) aufweisen, deren Höhe (H) mindestens der Schichtdicke (D) der Schutzschicht (4) entspricht, dadurch gekennzeichnet, daß die metallischen Vorsprünge (5) annähernd punkt- oder linienförmige Anlagebereiche bilden.

2. Federelement nach Anspruch 1, dadurch gekennzeichnet, daß die Vorsprünge (5) einen elastomeren Oberflächenbelag aus dem Werkstoff der Schutzschicht (4) aufweisen, wobei ihre Höhe (H) größer als die Schichtdicke (D) der Schutzschicht (4) ist, so daß sie den besagten elastomeren Oberflächenbelag bei der Verschraubung infolge hohen Flächendruckes wegdrücken und zu einer definierten metallischen Anlage kommen.

3. Federelement nach Anspruch 1, dadurch gekennzeichnet, daß die Vorsprünge (5) von der Schutzschicht (4) freigehalten und die Anschlußteile (1, 2) im übrigen mit der Schutzschicht (4) überzogen sind.

4. Federelement nach Anspruch 1, dadurch gekennzeichnet, daß die Vorsprünge (5) die Schutzschicht (4) überragen, wobei sie bis zu einer der Schichthöhe (D) der Schutzschicht (4) entsprechenden Höhe von der Schutzschicht (4) bedeckt und im übrigen von dieser freigehalten sind.

5. Federelement nach einem der Ansprüche 1 bis 4, dadurch gekennzeichnet, daß die Vorsprünge (5) kegel-, pyramiden-, warzen- oder spitzdachförmig durch entsprechende Formung oder Verformung der Anschlußteile (1, 2) gebildet sind.

6. Federelement nach einem der Ansprüche 1 bis 5, dadurch gekennzeichnet, daß die Vorsprünge (5) durch in die Anschlußteile (1, 2) eingeformte Sicken gebildet sind.

7. Federelement nach Anspruch 6, dadurch gekennzeichnet, daß die Anschlußteile (1, 2) Durchgangslöcher (6) für eine Schraubbefestigung aufweisen, die von durch entgegengesetzte Verformung erzeugten, zu den Durchgangslöchern (6) konzentrischen Doppelsicken (5.1, 5.2) umschlossen sind.

8. Federelement nach einem der Ansprüche 1 bis 7, dadurch gekennzeichnet, daß die elastomere Schutzschicht (4) aus dem Werkstoff des Gummifederkörpers (3) besteht.

## Claims

1. Rubber-and-metal resilient suspension element, which has a rubber resilient body (3) disposed between metallic connection members (1, 2) and firmly onnected to said members, some of the free surfaces of the metallic connection members (1, 2) which are not covered by the rubber resilient body (3) being provided with an elastomeric protective layer (4), which adheres to said members, and with metallic projection members (5) the height (H) of said projection members corresponding to at least the thickness (D) of the protective layer (4), characterised in that the metallic projection members (5) serve as nearly punctual or linear abutement regions.

2. Resilient suspension element according to claim 1, characterised in that the projection members (5) have an elastomeric surface covering formed from the material of the protective layer (4), the height (H) of said projection members being greater than the thickness (D) of the protective layer (4) so that they force away said elastomeric surface covering during the screwing process as a consequence of the high pressure per unit area and come to a specific metallic abutment.

3. Resilient suspension element according to claim 1, characterised in that the projection members (5) are kept free of the protective layer (4), and the connection members (1, 2) are also covered with the protective layer (4).

4. Resilient suspension element according to claim 1, characterised in that the projection members (5) protrude beyond the protective layer (4), wherein they are covered by the protective layer (4) up to a height corresponding to the height (D) of the protective layer (4) and are also kept free of said layer.

5. Resilient suspension element according to one of claims 1 to 4, characterised in that the projection members (5) are formed in a conical, pyramid-shaped, nodular or gable-like manner by a corresponding shaping or deforming of the connection members (1, 2).

6. Resilient suspension element according to one of claims 1 to 5, characterised in that the projection members (5) are formed by channels provided in the connection members (1, 2).

7. Resilient suspension element according to claim 6, characterised in that the connection members (1, 2) have through-bores (6) for a screw fastening, which bores are surrounded by double channels (5.1, 5.2), which are produced by opposite deformation and are concentric relative to the through-bores (6).

8. Resilient suspension element according to one of claims 1 to 7, characterised in that the elastomeric protective layer (4) is formed from the material of the rubber resilient body (3).

## Revendications

1. Elément élastique en caoutchouc et métal, comportant un corps élastique en caoutchouc (3) disposé entre des pièces de raccordement en métal (1, 2) et relié à celles-ci par adhérence, les surfaces libres, non recouvertes par le corps à ressort en caoutchouc (3) des pièces de raccordement en métal (1, 2) étant pourvues partiellement d'une couche de protection en élastomère (4) adhérant sur elles, et presentant des saillies (5) métalliques dont la hauteur (H) est au moins égale à l'épaisseur de couche (D) de la couche de protection (4), caractérisé en ce que les saillies (5) metalliques serve de zones de contact pratiquement en forme de points ou de lignes.

2. Elément élastique selon la revendication 1, caractérisé en ce que les saillies (5) sont pourvues d'un revêtement de surface en élastomère qui est constitué du matériau de la couche de protection (4), leur hauteur (H) étant supérieure à l'épaisseur de couche (D) de la couche de protection (4), de manière à ce qu'elles repoussent ledit revêtement de surface en élastomère lors du vissage par suite de la forte pression de surface, et réalisent un contact métallique défini.

3. Elément élastique selon la revendication 1, caractérisé en ce que les saillies (5) sont épargnées de la couche de protection (4) et les pièces de raccordement (1, 2) au demeurant recouvertes de la couche de protection (4).

4. Elément élastique selon la revendication 1, caractérisé en ce que les saillies (5) dépassent de la couche de protection (4) en étant recouvertes par la couche de protection (4) jusqu'à une hauteur correspondant à la hauteur de couche (D) de la couche de protection (4) et pour le reste exemptes de celle-ci.

5. Elément élastique selon l'une quelconque des revendications 1 à 4, caractérisé en ce que les saillies (5) sont conçues sous forme de cône, de pyramide, de bossage ou de toit pointu par façonnage ou déformation correspondante des pièces de raccordement (1, 2).

6. Elément ressort selon l'une quelconque des revendications 1 à 5, caractérisé en ce que les saillies (5) sont formées de collets formés dans les pièces de raccordement (1,2).

7. Elément élastique selon la revendication 6, caractérisé en ce que le pièces de raccordement (1, 2) présentent des trous traversants (6) pour une fixation à vis, qui sont entourés de collets doubles (5.1, 5.2) produits par déformation opposée et concentriques par rapport aux trous de passage (6).

8. Elément élastique selon l'une quelconque des revendications 1 à 7, caractérisé en que la couche de protection en élastomère (4) est constituée du matériau du corps élastique en caoutchouc (3).
